# EUROPEAN PATENT APPLICATION

(11) **EP 4 660 271 A1**
(43) Date of publication of application: **10.12.2025**
(21) Application number: 23919992.0
(22) Date of filing: 22.12.2023
(51) Int. Cl.: C09J 201/00, C07F 7/18, C08L 101/00, C09J 11/06, C09J 175/04

(54) **COMPOSITION CONTAINING LINEAR AMINOSILANE COMPOUND HAVING CARBOXYLIC ESTER GROUP AND CYCLIC SILAZANE COMPOUND HAVING CARBOXYLIC ESTER GROUP, AND METHOD FOR PRODUCING SAME**

(30) Priority: 30.01.2023 JP 2023011486
(71) Applicant: SHIN-ETSU CHEMICAL CO., LTD., Tokyo 1000005 (JP)
(72) Inventor: NAKAZAWA Koichi, Joetsu-shi, Niigata 942-8601 (JP); KIYOMORI Ayumu, Joetsu-shi, Niigata 942-8601 (JP)
(74) Representative: Mewburn Ellis LLP
(86) International application number: PCT/JP2023/046080
(87) International publication number: WO 2024/161857

(57) **Abstract**

A composition containing a linear aminosilane compound having a carboxylic ester group represented by general formula (1) 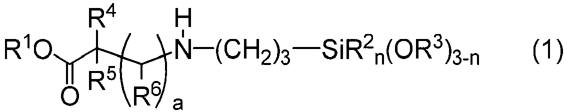 [R¹ represents a monovalent hydrocarbon group or a triorganosilyl group represented by general formula (2)

-SiR⁷R⁸R⁹ (2)

(R⁷, R⁸, and R⁹ represent a monovalent hydrocarbon group.),
R² and R³ represent a monovalent hydrocarbon group, R⁴, R⁵, and R⁶ represent a hydrogen atom or a monovalent hydrocarbon group, a is 0 or 1, and n is 0, 1, or 2.] and a cyclic silazane compound having a carboxylic ester group represented by general formula (3) 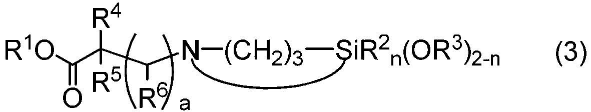 (R¹ to R⁶, a, and n have the same meanings as above.),
the content of the cyclic silazane compound being 0.2-10 mass%, exhibits a higher additive effect on resins than when either the linear aminosilane compound or the cyclic silazane compound having a carboxylic ester group is used alone.

## Description

### TECHNICAL FIELD

This invention relates to a composition comprising a linear aminosilane compound having a carboxylic ester group and a cyclic silazane compound having a carboxylic ester group and a method for preparing the same.

### BACKGROUND ART

Silane compounds having an amino group are known useful as paint additives, adhesives, silane coupling agents, fiber treating agents, and surface treating agents. Particularly when the silane compounds are added to urethane prepolymers, the adhesion to substrates is improved.

Silane compounds having an amino group and a carboxylic ester group are useful as modifiers for polyurethane because they have both an amino group and a carboxylic ester group in the molecule. For example, Patent Document 1 describes that when a linear aminosilane compound is used as a modifier for polyurethane, it imparts satisfactory storage stability and adhesion.

Patent Document 2 discloses a cyclic silazane compound having a carboxylic ester group. Since this compound is free of hydrogen on the nitrogen atom and prevents the functional group from reacting with a material to which it is added, a one-component composition may be provided.

### PRIOR ART DOCUMENTS

### PATENT DOCUMENTS

Patent Document 1: JP-A 2000-169544
Patent Document 2: JP-A 2011-246392

### SUMMARY OF INVENTION

### TECHNICAL PROBLEM

However, when a linear aminosilane compound is used alone as in Patent Document 1, it is less reactive with water included in substrates or air. In the course of the reaction process, it entails the generation of an alcohol which is a volatile organic compound (VOC), leaving a concern about environmental load.

When a cyclic silazane compound is used alone as in Patent Document 2, the cyclic silazane compound is non-reactive during mixing with a resin. On use of paint additives, adhesives, silane coupling agents, fiber treating agents, and surface treating agents, the highly reactive nitrogen-silicon bond reacts with water in substrates or air to form an active nitrogen-hydrogen bond. As a consequence, the cure of the resin component and the reaction of a nitrogen-hydrogen bond with the resin component become competitive, failing to exert an addition effect to a full extent.

An object of the invention, which has been made under the above-mentioned circumstances, is to provide a composition which when added to resins, exerts a higher addition effect than when a linear aminosilane compound or cyclic silazane compound having a carboxylic ester group is used alone, a method for preparing the composition, and a resin composition comprising the composition.

### SOLUTION TO PROBLEM

Making extensive investigations to attain the above object, the inventors have found that when a composition comprising a linear aminosilane compound having a carboxylic ester group and a cyclic silazane compound having a carboxylic ester group is added to adhesives or paints, the linear aminosilane compound having a nitrogen-hydrogen bond reacts with a resin component and the cyclic silazane compound having a nitrogen-silicon bond reacts with the substrate surface, both preferentially, suggesting that the composition exerts a better addition effect than when the linear aminosilane compound or cyclic silazane compound is used alone. The invention is predicated on this finding.

The invention is defined below.
1. A composition comprising
   a linear aminosilane compound having a carboxylic ester group, represented by the general formula (1): 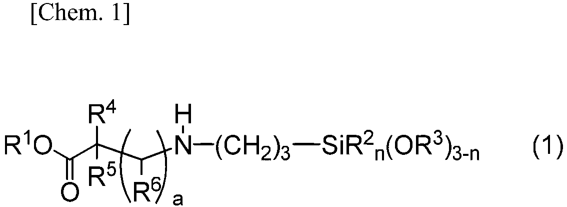 wherein R¹ is a substituted or unsubstituted, C₁-C₂₀ monovalent hydrocarbon group or a triorganosilyl group represented by the general formula (2):

      -SiR⁷R⁸R⁹ (2)

      wherein R⁷, R⁸, and R⁹ are each independently an unsubstituted C₁-C₂₀ monovalent hydrocarbon group, R² and R³ are each independently a substituted or unsubstituted, C₁-C₂₀ monovalent hydrocarbon group, R⁴, R⁵, and R⁶ are each independently hydrogen or a substituted or unsubstituted, C₁-C₂₀ monovalent hydrocarbon group, a is 0 or 1, and n is 0, 1 or 2, and
   a cyclic silazane compound having a carboxylic ester group, represented by the general formula (3): 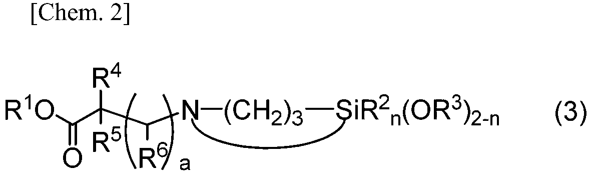 wherein R¹ to R⁶, a and n are as defined above, the content of the cyclic silazane compound being 0.2 to 10% by weight.
2. A resin composition comprising the composition of 1 and a resin.
3. The resin composition of 2 wherein the resin is at least one resin selected from the group consisting of a polyurethane resin, epoxy resin, acrylic resin, polyester, and polycarbonate.
4. The resin composition of 2 wherein the amount of the composition comprising the linear aminosilane compound having a carboxylic ester group and the cyclic silazane compound having a carboxylic ester group is 0.01 to 100 parts by weight per 100 parts by weight of the resin.
5. The resin composition of 2 which is an adhesive composition.
6. A method for preparing the composition of 1, comprising the steps of:
   performing addition reaction of an aminosilane compound having the general formula (4):
      [Chem. 3]

      H₂N-(CH₂)₃-SiR²ₙ(OR³)₃₋ₙ (4)

      wherein R², R³ and n are as defined above, with an unsaturated ester compound having the general formula (5): 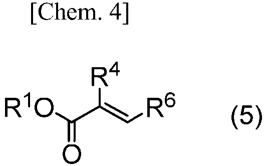 wherein R¹, R⁴ and R⁶ are as defined above, to yield a reaction solution containing the linear aminosilane compound having a carboxylic ester group, represented by formula (1), and
   distilling the reaction solution to recover the linear aminosilane compound having a carboxylic ester group along with the cyclic silazane compound having a carboxylic ester group, represented by formula (3), under a pressure of 3.0 to 15.0 kPa.
7. A method for preparing the composition of 1, comprising the steps of:
   performing substitution reaction of an aminosilane compound having the general formula (4):
      [Chem. 5]

      H₂N-(CH₂)₃-SiR²ₙ(OR³)₃₋ₙ (4)

      wherein R², R³ and n are as defined above, with a halogenated acetic ester compound having the general formula (6): 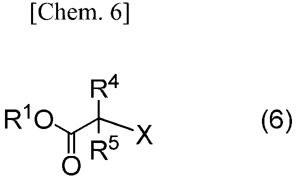 wherein R¹, R⁴ and R⁵ are as defined above and X is chlorine, bromine or iodine, to yield a reaction solution containing the linear aminosilane compound having a carboxylic ester group, represented by formula (1), and
   distilling the reaction solution to recover the linear aminosilane compound having a carboxylic ester group along with the cyclic silazane compound having a carboxylic ester group, represented by formula (3), under a pressure of 3.0 to 15.0 kPa.

### ADVANTAGEOUS EFFECTS OF INVENTION

The inventive composition exerts a better addition effect than when a linear aminosilane compound having a carboxylic ester group or a cyclic silazane compound having a carboxylic ester group is used alone. The composition is useful as paint additives, adhesives, silane coupling agents, fiber treating agents, and surface treating agents.

### DESCRIPTION OF EMBODIMENTS

Now the invention is described in detail.

### [1] Composition

The invention provides a composition comprising a linear aminosilane compound having a carboxylic ester group, represented by the general formula (1), referred to as compound (1), hereinafter, and a cyclic silazane compound having a carboxylic ester group, represented by the general formula (3), referred to as compound (3), hereinafter.

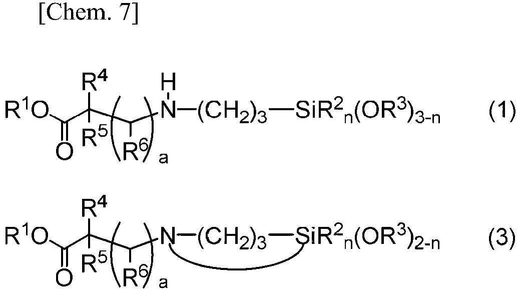

In formulae (1) and (3), R¹ is a substituted or unsubstituted, C₁-C₂₀, preferably C₁-C₁₀, more preferably C₁-C₅ monovalent hydrocarbon group or a triorganosilyl group represented by the general formula (2).

-SiR⁷R⁸R⁹ (2)

The monovalent hydrocarbon group R¹ encompasses straight, branched or cyclic alkyl, alkenyl, aryl and aralkyl groups.

Examples thereof include straight alkyl groups such as methyl, ethyl, n-propyl, n-butyl, pentyl, hexyl, heptyl, octyl, decyl, dodecyl, tetradecyl, hexadecyl and octadecyl; branched alkyl groups such as isopropyl, isobutyl, sec-butyl, tert-butyl, and 2-ethylhexyl; cyclic alkyl groups such as cyclopentyl and cyclohexyl; alkenyl groups such as vinyl, 1-propenyl and 2-propenyl (or allyl); aryl groups such as phenyl, tolyl and naphthyl; and aralkyl groups such as phenylmethyl and 2-phenylethyl.

Some or all of the hydrogen atoms in the hydrocarbon group may be substituted by other substituent groups, examples of which include C₁-C₆ alkoxy groups such as methoxy, ethoxy, (iso)propoxy and phenoxy; halogen atoms such as fluorine, chlorine, bromine and iodine; cyano, amino, acyl, C₁-C₅ alkoxycarbonyl, C₁-C₅ alkylsilyl, and C₁-C₅ alkoxysilyl groups, and mixtures thereof. The position of substitution is not particularly limited and the number of substituent groups is not particularly limited.

Of the foregoing examples of the monovalent hydrocarbon group R¹, substituted or unsubstituted, straight, branched or cyclic C₁-C₁₀ alkyl groups, alkenyl groups, aryl groups, and aralkyl groups are preferred. Especially from the standpoint of availability of precursor materials, unsubstituted, C₁-C₄ straight or branched alkyl groups and alkenyl groups are more preferred, with methyl, ethyl, n-propyl, isopropyl and tert-butyl being even more preferred.

In formula (2), R⁷, R⁸, and R⁹ are each independently a substituted or unsubstituted, C₁-C₂₀, preferably C₁-C₁₀, more preferably C₁-C₅ monovalent hydrocarbon group.

Examples of the monovalent hydrocarbon group represented by R⁷, R⁸, and R⁹ are as exemplified for the monovalent hydrocarbon group R¹.

Of the foregoing examples of the monovalent hydrocarbon group R⁷, R⁸, and R⁹, substituted or unsubstituted, C₁-C₆ straight, branched or cyclic alkyl groups, alkenyl groups, and aryl groups are preferred. Especially from the standpoint of availability of precursor materials, unsubstituted, C₁-C₄ straight or branched alkyl groups and alkenyl groups are more preferred, with methyl, ethyl, isopropyl and tert-butyl being even more preferred.

Examples of the triorganosilyl group having formula (2) include trimethylsilyl, ethyldimethylsilyl, diethylmethylsilyl, triethylsilyl, tert-butyldimethylsilyl, triisopropylsilyl, hexyldimethylsilyl, octyldimethylsilyl, decyldimethylsilyl, octadecyldimethylsilyl, phenyldimethylsilyl, diphenylmethylsilyl, triphenylsilyl, and tert-butyldiphenylsilyl.

Of these, as viewed from the availability of precursor materials, trimethylsilyl, triethylsilyl, tert-butyldimethylsilyl, triisopropylsilyl, and tert-butyldiphenylsilyl are more preferred, with trimethylsilyl and triisopropylsilyl being more preferred.

In formulae (1) and (3), R² and R³ are each independently a substituted or unsubstituted, C₁-C₂₀, preferably C₁-C₁₀, more preferably C₁-C₅ monovalent hydrocarbon group.

Examples of the monovalent hydrocarbon group represented by R² and R³ are as exemplified for the monovalent hydrocarbon group R¹.

In formulae (1) and (3), R⁴, R⁵, and R⁶ are each independently hydrogen or a substituted or unsubstituted, C₁-C₂₀, preferably C₁-C₁₀ monovalent hydrocarbon group.

Examples of the monovalent hydrocarbon group represented by R⁴, R⁵, and R⁶ are as exemplified for the monovalent hydrocarbon group R¹.

The subscript "a" is 0 or 1, preferably 1, and n is 0, 1 or 2, preferably 0 or 1, more preferably 0.

Examples of compound (1) include N-(2-methoxycarbonyl)ethyl-3-aminopropyltrimethoxysilane, N-(2-methoxycarbonyl)ethyl-3-aminopropylmethyldimethoxysilane, N-(2-methoxycarbonyl)ethyl-3-aminopropyldimethylmethoxysilane, N-(2-methoxycarbonyl)ethyl-3-aminopropyltriethoxysilane, N-(2-methoxycarbonyl)ethyl-3-aminopropylmethyldiethoxysilane, N-(2-methoxycarbonyl)ethyl-3-aminopropyldimethylethoxysilane, N-(2-ethoxycarbonyl)ethyl-3-aminopropyltrimethoxysilane, N-(2-ethoxycarbonyl)ethyl-3-aminopropylmethyldimethoxysilane, N-(2-ethoxycarbonyl)ethyl-3-aminopropyldimethylmethoxysilane, N-(2-ethoxycarbonyl)ethyl-3-aminopropyltriethoxysilane, N-(2-ethoxycarbonyl)ethyl-3-aminopropylmethyldiethoxysilane, N-(2-ethoxycarbonyl)ethyl-3-aminopropyldimethylethoxysilane, N-(2-trimethylsiloxycarbonyl)ethyl-3-aminopropyltrimethoxysilane, N-(2-trimethylsiloxycarbonyl)ethyl-3-aminopropylmethyldimethoxysilane, N-(2-trimethylsiloxycarbonyl)ethyl-3-aminopropyldimethylmethoxysilane, N-(2-trimethylsiloxycarbonyl)ethyl-3-aminopropyltriethoxysilane, N-(2-trimethylsiloxycarbonyl)ethyl-3-aminopropylmethyldiethoxysilane, N-(2-trimethylsiloxycarbonyl)ethyl-3-aminopropyldimethylethoxysilane, N-(2-triethylsiloxycarbonyl)ethyl-3-aminopropyltrimethoxysilane, N-(2-triethylsiloxycarbonyl)ethyl-3-aminopropylmethyldimethoxysilane, N-(2-triethylsiloxycarbonyl)ethyl-3-aminopropyldimethylmethoxysilane, N-(2-triisopropylsiloxycarbonyl)ethyl-3-aminopropyltrimethoxysilane, N-(2-triisopropylsiloxycarbonyl)ethyl-3-aminopropylmethyldimethoxysilane, N-(2-triisopropylsiloxycarbonyl)ethyl-3-aminopropyldimethylmethoxysilane, N-(2-methoxycarbonyl-2-methyl)ethyl-3-aminopropyltrimethoxysilane, N-(2-ethoxycarbonyl-2-methyl)ethyl-3-aminopropyltriethoxysilane, N-(2-methoxycarbonyl-2-methyl)ethyl-3-aminopropylmethyldimethoxysilane, N-(2-methoxycarbonyl-2-methyl)ethyl-3-aminopropyldimethylmethoxysilane, N-(2-methoxycarbonyl-2-phenyl)ethyl-3-aminopropyltrimethoxysilane, N-(2-methoxycarbonyl-2-phenyl)ethyl-3-aminopropylmethyldimethoxysilane, N-(2-methoxycarbonyl-2-phenyl)ethyl-3-aminopropyldimethylmethoxysilane, N-(1-methyl-2-methoxycarbonyl)ethyl-3-aminopropyltrimethoxysilane, N-(1-methyl-2-methoxycarbonyl)ethyl-3-aminopropylmethyldimethoxysilane, N-(1-methyl-2-methoxycarbonyl)ethyl-3-aminopropyldimethylmethoxysilane, N-(1-phenyl-2-methoxycarbonyl)ethyl-3-aminopropyltrimethoxysilane, N-(1-phenyl-2-methoxycarbonyl)ethyl-3-aminopropylmethyldimethoxysilane, N-(1-phenyl-2-methoxycarbonyl)ethyl-3-aminopropyldimethylmethoxysilane, N-[1,2-bis(methoxycarbonyl)]ethyl-3-aminopropyltrimethoxysilane, N-[1,2-bis(methoxycarbonyl)]ethyl-3-aminopropylmethyldimethoxysilane, N-[1,2-bis(methoxycarbonyl)]ethyl-3-aminopropyldimethylmethoxysilane, N-[2,3-bis(methoxycarbonyl)]propyl-3-aminopropyltrimethoxysilane, N-[2,3-bis(methoxycarbonyl)]propyl-3-aminopropylmethyldimethoxysilane, N-[2,3-bis(methoxycarbonyl)]propyl-3-aminopropyldimethylmethoxysilane, N-(methoxycarbonyl)methyl-3-aminopropyltrimethoxysilane, N-(methoxycarbonyl)methyl-3-aminopropylmethyldimethoxysilane, N-(methoxycarbonyl)methyl-3-aminopropyldimethylmethoxysilane, N-(methoxycarbonyl)methyl-3-aminopropyltriethoxysilane, N-(methoxycarbonyl)methyl-3-aminopropylmethyldiethoxysilane, N-(methoxycarbonyl)methyl-3-aminopropyldimethylethoxysilane, N-(ethoxycarbonyl)methyl-3-aminopropyltrimethoxysilane, N-(ethoxycarbonyl)methyl-3-aminopropylmethyldimethoxysilane, N-(ethoxycarbonyl)methyl-3-aminopropyldimethylmethoxysilane, N-(ethoxycarbonyl)methyl-3-aminopropyltriethoxysilane, N-(ethoxycarbonyl)methyl-3-aminopropylmethyldiethoxysilane, N-(ethoxycarbonyl)methyl-3-aminopropyldimethylethoxysilane, N-(trimethylsiloxycarbonyl)methyl-3-aminopropyltrimethoxysilane, N-(trimethylsiloxycarbonyl)methyl-3-aminopropylmethyldimethoxysilane, N-(trimethylsiloxycarbonyl)methyl-3-aminopropyldimethylmethoxysilane, N-(trimethylsiloxycarbonyl)methyl-3-aminopropyltriethoxysilane, N-(trimethylsiloxycarbonyl)methyl-3-aminopropylmethyldiethoxysilane, N-(trimethylsiloxycarbonyl)methyl-3-aminopropyldimethylethoxysilane, N-(triethylsiloxycarbonyl)methyl-3-aminopropyltrimethoxysilane, N-(triethylsiloxycarbonyl)methyl-3-aminopropylmethyldimethoxysilane, N-(triethylsiloxycarbonyl)methyl-3-aminopropyldimethylmethoxysilane, N-(triisopropylsiloxycarbonyl)methyl-3-aminopropyltrimethoxysilane, N-(triisopropylsiloxycarbonyl)methyl-3-aminopropylmethyldimethoxysilane, N-(triisopropylsiloxycarbonyl)methyl-3-aminopropyldimethylmethoxysilane, N-(1-methoxycarbonyl)ethyl-3-aminopropyltrimethoxysilane, N-(1-methoxycarbonyl)ethyl-3-aminopropylmethyldimethoxysilane, N-(1-methoxycarbonyl)ethyl-3-aminopropyldimethylmethoxysilane, N-(1-methoxycarbonyl-1-methyl)ethyl-3-aminopropyltrimethoxysilane, N-(1-methoxycarbonyl-1-methyl)ethyl-3-aminopropylmethyldimethoxysilane, and N-(1-methoxycarbonyl-1-methyl)ethyl-3-aminopropyldimethylmethoxysilane.

Of these, preferred are N-(2-methoxycarbonyl)ethyl-3-aminopropyltrimethoxysilane, N-(2-methoxycarbonyl)ethyl-3-aminopropylmethyldimethoxysilane, N-(2-ethoxycarbonyl)ethyl-3-aminopropyltriethoxysilane, N-(2-trimethylsiloxycarbonyl)ethyl-3-aminopropyltrimethoxysilane, N-(2-triisopropylsiloxycarbonyl)ethyl-3-aminopropyltrimethoxysilane, N-(2-methoxycarbonyl-2-methyl)ethyl-3-aminopropyltrimethoxysilane, N-(2-ethoxycarbonyl-2-methyl)ethyl-3-aminopropyltriethoxysilane, N-(1-methyl-2-methoxycarbonyl)ethyl-3-aminopropyltrimethoxysilane, N-(1-phenyl-2-methoxycarbonyl)ethyl-3-aminopropyltrimethoxysilane, N-[1,2-bis(methoxycarbonyl)]ethyl-3-aminopropyltrimethoxysilane, N-[2,3-bis(methoxycarbonyl)]propyl-3-aminopropyltrimethoxysilane, N-(methoxycarbonyl)methyl-3-aminopropyltrimethoxysilane, and N-(methoxycarbonyl)methyl-3-aminopropylmethyldimethoxysilane.

Examples of compound (3) include 2,2-dimethoxy-1-(2-methoxycarbonyl)ethyl-1-aza-2-silacyclopentane, 2-methoxy-2-methyl-1-(2-methoxycarbonyl)ethyl-1-aza-2-silacyclopentane, 2,2-dimethyl-1-(2-methoxycarbonyl)ethyl-1-aza-2-silacyclopentane, 2,2-diethoxy-1-(2-methoxycarbonyl)ethyl-1-aza-2-silacyclopentane, 2-ethoxy-2-methyl-1-(2-methoxycarbonyl)ethyl-1-aza-2-silacyclopentane, 2,2-diethyl-1-(2-methoxycarbonyl)ethyl-1-aza-2-silacyclopentane, 2,2-dimethoxy-1-(2-ethoxycarbonyl)ethyl-1-aza-2-silacyclopentane, 2-methoxy-2-methyl-1-(2-ethoxycarbonyl)ethyl-1-aza-2-silacyclopentane, 2,2-dimethyl-1-(2-ethoxycarbonyl)ethyl-1-aza-2-silacyclopentane, 2,2-diethoxy-1-(2-ethoxycarbonyl)ethyl-1-aza-2-silacyclopentane, 2-ethoxy-2-methyl-1-(2-ethoxycarbonyl)ethyl-1-aza-2-silacyclopentane, 2,2-diethyl-1-(2-ethoxycarbonyl)ethyl-1-aza-2-silacyclopentane, 2,2-dimethoxy-1-(2-trimethylsiloxycarbonyl)ethyl-1-aza-2-silacyclopentane, 2-methoxy-2-methyl-1-(2-trimethylsiloxycarbonyl)ethyl-1-aza-2-silacyclopentane, 2,2-dimethyl-1-(2-trimethylsiloxycarbonyl)ethyl-1-aza-2-silacyclopentane, 2,2-diethoxy-1-(2-trimethylsiloxycarbonyl)ethyl-1-aza-2-silacyclopentane, 2-ethoxy-2-methyl-1-(2-trimethylsiloxycarbonyl)ethyl-1-aza-2-silacyclopentane, 2,2-diethyl-1-(2-trimethylsiloxycarbonyl)ethyl-1-aza-2-silacyclopentane, 2,2-dimethoxy-1-(2-triethylsiloxycarbonyl)ethyl-1-aza-2-silacyclopentane, 2-methoxy-2-methyl-1-(2-triethylsiloxycarbonyl)ethyl-1-aza-2-silacyclopentane, 2,2-dimethyl-1-(2-triethylsiloxycarbonyl)ethyl-1-aza-2-silacyclopentane, 2,2-dimethoxy-1-(2-triisopropylsiloxycarbonyl)ethyl-1-aza-2-silacyclopentane, 2-methoxy-2-methyl-1-(2-triisopropylsiloxycarbonyl)ethyl-1-aza-2-silacyclopentane, 2,2-dimethyl-1-(2-triisopropylsiloxycarbonyl)ethyl-1-aza-2-silacyclopentane, 2,2-dimethoxy-1-(2-methoxycarbonyl-2-methyl)ethyl-1-aza-2-silacyclopentane, 2,2-diethoxy-1-(2-ethoxycarbonyl-2-methyl)ethyl-1-aza-2-silacyclopentane, 2-methoxy-2-methyl-1-(2-methoxycarbonyl-2-methyl)ethyl-1-aza-2-silacyclopentane, 2,2-dimethyl-1-(2-methoxycarbonyl-2-methyl)ethyl-1-aza-2-silacyclopentane, 2,2-dimethoxy-1-(2-methoxycarbonyl-2-phenyl)ethyl-1-aza-2-silacyclopentane, 2-methoxy-2-methyl-1-(2-methoxycarbonyl-2-phenyl)ethyl-1-aza-2-silacyclopentane, 2,2-dimethyl-1-(2-methoxycarbonyl-2-phenyl)ethyl-1-aza-2-silacyclopentane, 2,2-dimethoxy-1-(1-methyl-2-methoxycarbonyl)ethyl-1-aza-2-silacyclopentane, 2-methoxy-2-methyl-1-(1-methyl-2-methoxycarbonyl)ethyl-1-aza-2-silacyclopentane, 2,2-dimethyl-1-(1-methyl-2-methoxycarbonyl)ethyl-1-aza-2-silacyclopentane, 2,2-dimethoxy-1-(1-phenyl-2-methoxycarbonyl)ethyl-1-aza-2-silacyclopentane, 2-methoxy-2-methyl-1-(1-phenyl-2-methoxycarbonyl)ethyl-1-aza-2-silacyclopentane, 2,2-dimethyl-1-(1-phenyl-2-methoxycarbonyl)ethyl-1-aza-2-silacyclopentane, 2,2-dimethoxy-1-[1,2-bis(methoxycarbonyl)]ethyl-1-aza-2-silacyclopentane, 2-methoxy-2-methyl-1-[1,2-bis(methoxycarbonyl)]ethyl-1-aza-2-silacyclopentane, 2,2-dimethyl-1-[1,2-bis(methoxycarbonyl)ethyl-1-aza-2-silacyclopentane, 2,2-dimethoxy-1-[2,3-bis(methoxycarbonyl)]propyl-1-aza-2-silacyclopentane, 2-methoxy-2-methyl-1-[2,3-bis(methoxycarbonyl)]propyl-1-aza-2-silacyclopentane, 2,2-dimethyl-1-[2,3-bis(methoxycarbonyl)]propyl-1-aza-2-silacyclopentane, 2,2-dimethoxy-1-(methoxycarbonyl)methyl-1-aza-2-silacyclopentane, 2-methoxy-2-methyl-1-(methoxycarbonyl)methyl-1-aza-2-silacyclopentane, 2,2-dimethyl-1- (methoxycarbonyl)methyl-1-aza-2-silacyclopentane, 2,2-diethoxy-1-(methoxycarbonyl)methyl-1-aza-2-silacyclopentane, 2-ethoxy-2-methyl-1-(methoxycarbonyl)methyl-1-aza-2-silacyclopentane, 2,2-diethyl-1-(methoxycarbonyl)methyl-1-aza-2-silacyclopentane, 2,2-dimethoxy-1-(ethoxycarbonyl)methyl-1-aza-2-silacyclopentane, 2-methoxy-2-methyl-1-(ethoxycarbonyl)methyl-1-aza-2-silacyclopentane, 2,2-dimethyl-1-(ethoxycarbonyl)methyl-1-aza-2-silacyclopentane, 2,2-diethoxy-1-(ethoxycarbonyl)methyl-1-aza-2-silacyclopentane, 2-ethoxy-2-methyl-1-(ethoxycarbonyl)methyl-1-aza-2-silacyclopentane, 2,2-diethyl-1-(ethoxycarbonyl)methyl-1-aza-2-silacyclopentane, 2,2-dimethoxy-1-(trimethylsiloxycarbonyl)methyl-1-aza-2-silacyclopentane, 2-methoxy-2-methyl-1-(trimethylsiloxycarbonyl)methyl-1-aza-2-silacyclopentane, 2,2-dimethyl-1-(trimethylsiloxycarbonyl)methyl-1-aza-2-silacyclopentane, 2,2-diethoxy-1-(trimethylsiloxycarbonyl)methyl-1-aza-2-silacyclopentane, 2-ethoxy-2-methyl-1-(trimethylsiloxycarbonyl)methyl-1-aza-2-silacyclopentane, 2,2-diethyl-1-(trimethylsiloxycarbonyl)methyl-1-aza-2-silacyclopentane, 2,2-dimethoxy-1-(triethylsiloxycarbonyl)methyl-1-aza-2-silacyclopentane, 2-methoxy-2-methyl-1-(triethylsiloxycarbonyl)methyl-1-aza-2-silacyclopentane, 2,2-dimethyl-1-(triethylsiloxycarbonyl)methyl-1-aza-2-silacyclopentane, 2,2-dimethoxy-1-(triisopropylsiloxycarbonyl)methyl-1-aza-2-silacyclopentane, 2-methoxy-2-methyl-1-(triisopropylsiloxycarbonyl)methyl-1-aza-2-silacyclopentane, 2,2-dimethyl-1-(triisopropylsiloxycarbonyl)methyl-1-aza-2-silacyclopentane, 2,2-dimethoxy-1-(1-methoxycarbonyl)ethyl-1-aza-2-silacyclopentane, 2-methoxy-2-methyl-1-(methoxycarbonyl)ethyl-1-aza-2-silacyclopentane, 2,2-dimethyl-1-(1-methoxycarbonyl)ethyl-1-aza-2-silacyclopentane, 2,2-dimethoxy-1-(1-methoxycarbonyl-1-methyl)ethyl-1-aza-2-silacyclopentane, 2-methoxy-2-methyl-1-(1-methoxycarbonyl-1-methyl)ethyl-1-aza-2-silacyclopentane, and 2,2-dimethyl-1-(1-methoxycarbonyl-1-methyl)ethyl-1-aza-2-silacyclopentane.

Of these, preferred are 2,2-dimethoxy-1-(2-methoxycarbonyl)ethyl-1-aza-2-silacyclopentane, 2-methoxy-2-methyl-1-(2-methoxycarbonyl)ethyl-1-aza-2-silacyclopentane, 2,2-diethoxy-1-(2-ethoxycarbonyl)ethyl-1-aza-2-silacyclopentane, 2,2-dimethoxy-1-(2-trimethylsiloxycarbonyl)ethyl-1-aza-2-silacyclopentane, 2,2-dimethoxy-1-(2-triisopropylsiloxycarbonyl)ethyl-1-aza-2-silacyclopentane, 2,2-dimethoxy-1-(2-methoxycarbonyl-2-methyl)ethyl-1-aza-2-silacyclopentane, 2,2-diethoxy-1-(2-ethoxycarbonyl-2-methyl)ethyl-1-aza-2-silacyclopentane, 2,2-dimethoxy-1-(1-methyl-2-methoxycarbonyl)ethyl-1-aza-2-silacyclopentane, 2,2-dimethoxy-1-(1-phenyl-2-methoxycarbonyl)ethyl-1-aza-2-silacyclopentane, 2,2-dimethoxy-1-[1,2-bis(methoxycarbonyl)]ethyl-1-aza-2-silacyclopentane, 2,2-dimethoxy-1-[2,3-bis(methoxycarbonyl)]propyl-1-aza-2-silacyclopentane, 2,2-dimethoxy-1-(methoxycarbonyl)methyl-1-aza-2-silacyclopentane, and 2-methoxy-2-methyl-1-(methoxycarbonyl)methyl-1-aza-2-silacyclopentane.

In the composition, the content of compound (3) is 0.2 to 10% by weight, preferably 0.3 to 8% by weight, more preferably 0.5 to 6% by weight, even more preferably 1 to 5% by weight.

### [2] Method of preparing the composition

The inventive composition can be prepared, for example, by the following two methods.

The first method involves the steps of performing addition reaction of an aminosilane compound having the general formula (4), referred to as compound (4), hereinafter, with an unsaturated ester compound having the general formula (5), referred to as compound (5), hereinafter, to yield a reaction solution containing compound (1), and distilling the reaction solution under a pressure of 3.0 to 15.0 kPa to recover compound (1) along with compound (3).

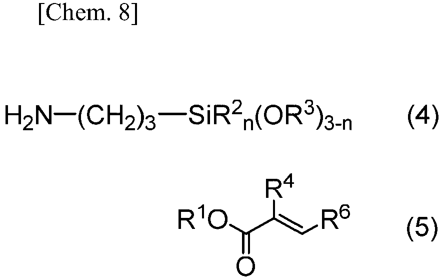

Herein, R¹, R², R³, R⁴, R⁶, and n are as defined above.

Examples of compound (4) include 3-aminopropyltrimethoxysilane, 3-aminopropyldimethoxymethylsilane, 3-aminopropylmethoxydimethylsilane, 3-aminopropyldimethoxyethylsilane, 3-aminopropylmethoxydiethylsilane, 3-aminopropyldimethoxypropylsilane, 3-aminopropylmethoxypropylsilane, 3-aminopropyltriethoxysilane, 3-aminopropyldiethoxymethylsilane, 3-aminopropylethoxydimethylsilane, 3-aminopropyltripropoxysilane, 3-aminopropyldipropoxymethylsilane, 3-aminopropylpropoxydimethylsilane, 3-aminopropyltriisopropoxysilane, 3-aminopropyldiisopropoxymethylsilane, and 3-aminopropylisopropoxydimethylsilane.

Of these, preferred are 3-aminopropyltrimethoxysilane, 3-aminopropyldimethoxymethylsilane, and 3-aminopropyltriethoxysilane.

Compound (4) is commercially available or may be prepared. When prepared, the method may be any of prior art well-known methods, for example, hydrosilation reaction of an allyl amine compound with a hydrosilane compound, or transesterification reaction between an aminosilane compound and an alcohol.

Examples of compound (5) include methyl acrylate, ethyl acrylate, trimethylsilyl acrylate, triethylsilyl acrylate, triisopropylsilyl acrylate, 2-ethylhexyl acrylate, methyl methacrylate, ethyl methacrylate, trimethylsilyl methacrylate, methyl crotonate, ethyl crotonate, trimethylsilyl crotonate, methyl cinnamate, ethyl cinnamate, trimethylsilyl cinnamate, dimethyl maleate, diethyl maleate, bis(trimethylsilyl) maleate, dimethyl fumarate, diethyl fumarate, dimethyl itaconate, diethyl itaconate, bis(trimethylsilyl) itaconate, dimethyl citraconate, diethyl citraconate, bis(trimethylsilyl) citraconate, dimethyl mesaconate, diethyl mesaconate, and bis(trimethylsilyl) mesaconate.

Of these, preferred are methyl acrylate, ethyl acrylate, trimethylsilyl acrylate, triisopropylsilyl acrylate, methyl methacrylate, ethyl methacrylate, methyl crotonate, ethyl crotonate, methyl cinnamate, ethyl cinnamate, dimethyl maleate, diethyl maleate, dimethyl fumarate, diethyl fumarate, dimethyl itaconate, and diethyl itaconate.

Compound (5) is commercially available or may be prepared. When prepared, the method may be any of prior art well-known methods, for example, esterification reaction of an unsaturated carboxylic acid.

The second method involves the steps of performing substitution reaction of compound (4) with a halogenated acetic ester compound having the general formula (6), referred to as compound (6), hereinafter, to yield a reaction solution containing compound (1), and distilling the reaction solution under a pressure of 3.0 to 15.0 kPa to recover compound (1) along with compound (3).

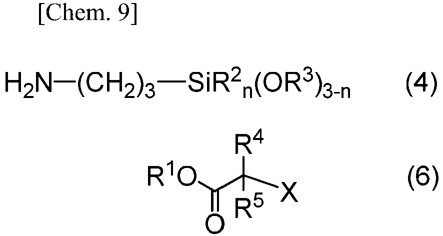

Herein, R¹, R², R³, R⁴, R⁵, and n are as defined above.

In formula (6), X is chlorine, bromine or iodine.

Examples of compound (6) include methyl chloroacetate, ethyl chloroacetate, butyl chloroacetate, 2-ethylhexyl chloroacetate, trimethylsilyl chloroacetate, triethylsilyl chloroacetate, triisopropylsilyl chloroacetate, methyl 2-chloropropionate, ethyl 2-chloropropionate, butyl 2-chloropropionate, 2-ethylhexyl 2-chloropropionate, trimethylsilyl 2-chloropropionate, triethylsilyl 2-chloropropionate, triisopropylsilyl 2-chloropropionate, methyl 2-chloroisobutyrate, ethyl 2-chloroisobutyrate, butyl 2-chloroisobutyrate, 2-ethylhexyl 2-chloroisobutyrate, trimethylsilyl 2-chloroisobutyrate, triethylsilyl 2-chloroisobutyrate, triisopropylsilyl 2-chloroisobutyrate, methyl bromoacetate, ethyl bromoacetate, butyl bromoacetate, 2-ethylhexyl bromoacetate, trimethylsilyl bromoacetate, triethylsilyl bromoacetate, triisopropylsilyl bromoacetate, methyl iodoacetate, ethyl iodoacetate, butyl iodoacetate, 2-ethylhexyl iodoacetate, trimethylsilyl iodoacetate, triethylsilyl iodoacetate, and triisopropylsilyl iodoacetate.

Of these, preferred are methyl chloroacetate, ethyl chloroacetate, methyl 2-chloropropionate, ethyl 2-chloropropionate, methyl 2-chloroisobutyrate, methyl bromoacetate, ethyl bromoacetate, methyl iodoacetate, and ethyl iodoacetate.

Compound (6) is commercially available or may be prepared. When prepared, the method may be any of prior art well-known methods, for example, esterification reaction of a halogenated acetic acid.

An amine compound may be used for removing the hydrogen halide formed during substitution reaction of compound (4) with compound (6).

Exemplary amine compounds include trialkylamines such as triethylamine, tributylamine, trihexylamine, trioctylamine, and N,N-diisopropylethylamine; ethylene diamines such as ethylene diamine, N,N-dimethylethylene diamine, and N,N,N,N-tetramethylethylene diamine; aromatic amines such as aniline and dimethylaniline; and cyclic amines such as 1,4-diazabicyclo[2.2.2]octane, 1,5-diazabicyclo[4.3.0]-5-nonene, and 1,8-diazabicyclo[5.4.0]undec-7-ene.

Of these, preferred are triethylamine, trioctylamine, 1,4-diazabicyclo[2.2.2]octane, 1,5-diazabicyclo[4.3.0]-5-nonene, and 1,8-diazabicyclo[5.4.0]undec-7-ene.

In the first and second methods, the amount of compound (5) or (6) added is preferably 0.1 to 10 moles, more preferably 0.2 to 5 moles, even more preferably 0.3 to 3 moles per mole of compound (4) per mole of compound (4).

In the first and second methods, the reaction temperature is preferably 0 to 200°C, more preferably 50 to 200°C, though not critical. The reaction time is preferably 1 to 100 hours, more preferably 1 to 50 hours, though not critical.

In the first and second methods, an acidic or basic compound may be used as a catalyst for accelerating the reaction rate.

Exemplary acidic compounds include sulfuric acid; sulfonic acids such as methanesulfonic acid, p-toluenesulfonic acid, dodecylbenzenesulfonic acid and trifluoromethanesulfonic acid; carboxylic acids such as acetic acid, propionic acid and trifluoroacetic acid, and ammonium and pyridinium salts thereof.

Exemplary basic compounds include sodium alkoxides such as sodium methoxide, methanol solution of sodium methoxide, sodium ethoxide, ethanol solution of sodium ethoxide, sodium tert-butoxide, and sodium phenoxide; potassium alkoxides such as potassium methoxide, potassium ethoxide, and potassium tert-butoxide; and lithium alkoxides such as lithium methoxide and lithium ethoxide.

Of these, preferred are sulfuric acid, ammonium sulfate, dodecylbenzenesulfonic acid, trifluoromethanesulfonic acid, sodium methoxide, and methanol solution of sodium methoxide.

For the reactions in the first and second methods, a solvent may be used although either reaction may run in a solventless system. Examples of the solvent used herein include hydrocarbon solvents such as pentane, hexane, cyclohexane, isooctane, benzene, toluene, and xylene; ether solvents such as diethyl ether, tetrahydrofuran and dioxane; ester solvents such as ethyl acetate and butyl acetate; ketone solvents such as acetone, methyl ethyl ketone, and methyl isobutyl ketone; aprotic polar solvents such as acetonitrile, dimethyl sulfoxide, N,N-dimethylformamide, N-methylpyrrolidone and hexamethylphosphoric triamide; chlorinated hydrocarbon solvents such as dichloromethane and chloroform; and alcohol solvents such as methanol, ethanol and isopropyl alcohol. These solvents may be used alone or in admixture of two or more.

From the reaction solution thus obtained, compounds (1) and (3) can be recovered by vacuum distillation. The pressure during distillation is 3.0 to 15.0 kPa, preferably 4.0 to 12.0 kPa, more preferably 5.0 to 10.0 kPa.

When the content of compound (3) in the distillate is high, the content of compound (3) can be adjusted by adding an alcohol to the distillate to convert compound (3) to compound (1).

Although the alcohol used herein is not particularly limited, examples thereof include alcohols of 1 to 8 carbon atoms such as methanol, ethanol, propanol, butanol, pentanol, hexanol, octanol, decanol, isopropanol, isobutanol, tert-butanol, and 2-ethylhexanol. Inter alia, methanol and ethanol are preferred.

When the content of compound (3) in the distillate is low, the content of compound (3) can be adjusted by adding compound (3) to the distillate.

### [3] Resin composition

The invention also provides a resin composition comprising the composition containing compounds (1) and (3) and a resin.

When the composition containing compounds (1) and (3) is added to the resin, the amino group in compound (1) preferentially reacts with a reactive group (e.g., isocyanate or epoxy group) in the resin and the nitrogen-silicon bond in compound (3) preferentially reacts with a substrate surface (e.g., hydroxy group) whereby better performance is exerted than when compounds (1) and (3) are separately used.

Although the resin is not particularly limited, examples thereof include polyurethane resins, polyimide resins, epoxy resins, acrylic resins, polyester resins, polycarbonate resins, ABS resins, EPDM resins, EPM resins, PBT resins, PET resins, nylon resins, phenolic resins, polyethylene resins, polyvinyl chloride resins, polystyrene resins, polypropylene resins, melamine resins, and furan resins.

Of these, polyurethane resins, epoxy resins, acrylic resins, polyester resins, and polycarbonate resins are preferred, with polyurethane and epoxy resins being more preferred.

In the resin composition, the amount of the composition containing compounds (1) and (3) is preferably 0.01 to 100 parts by weight, more preferably 0.02 to 50 parts by weight, even more preferably 0.05 to 30 parts by weight, most preferably 0.1 to 20 parts by weight per 100 parts by weight of the resin, though not critical.

### EXAMPLES

Synthesis Examples, Examples, and Comparative Examples are given below for further illustrating the invention although the invention is not limited thereto.

### [1] Preparation of composition

### [Example 1-1] Synthesis of composition containing N-(2-methoxycarbonyl)ethyl-3-aminopropyltrimethoxysilane and 2,2-dimethoxy-1-(2-methoxycarbonyl)ethyl-1-aza-2-silacyclopentane

A flask equipped with a stirrer, reflux condenser, dropping funnel and thermometer was charged with 448.2 g (2.5 mol) of 3-aminopropyltrimethoxysilane and 44.8 g of methanol and heated at 60°C. Once the internal temperature became constant, 215.2 g (2.5 mol) of methyl acrylate was added dropwise over 2 hours and stirring was continued at the temperature for 1.5 hours. On distillation of the resulting reaction solution, 523.7 g of a composition containing N-(2-methoxycarbonyl)ethyl-3-aminopropyltrimethoxysilane and 2,2-dimethoxy-1-(2-methoxycarbonyl)ethyl-1-aza-2-silacyclopentane, referred to as Composition A, hereinafter, was obtained as a fraction having a boiling point of 193-196°C/5.0 kPa. The content of 2,2-dimethoxy-1-(2-methoxycarbonyl)ethyl-1-aza-2-silacyclopentane in Composition A was 7.5% by weight.

### [Example 1-2] Synthesis of composition containing N-(2-ethoxycarbonyl-2-methyl)ethyl-3-aminopropyltriethoxysilane and 2,2-diethoxy-1-(2-ethoxycarbonyl-2-methyl)ethyl-1-aza-2-silacyclopentane

A flask equipped with a stirrer, reflux condenser, dropping funnel and thermometer was charged with 332.1 g (1.5 mol) of 3-aminopropyltriethoxysilane and 33.2 g of ethanol and heated at 90°C. Once the internal temperature became constant, 171.2 g (1.5 mol) of ethyl methacrylate was added dropwise over 1 hour and stirring was continued at the temperature for 14 hours. On distillation of the resulting reaction solution, 338.5 g of a composition containing N-(2-ethoxycarbonyl-2-methyl)ethyl-3-aminopropyltriethoxysilane and 2,2-diethoxy-1-(2-ethoxycarbonyl-2-methyl)ethyl-1-aza-2-silacyclopentane was obtained as a fraction having a boiling point of 185-189°C/3.0 kPa. The content of 2,2-diethoxy-1-(2-ethoxycarbonyl-2-methyl)ethyl-1-aza-2-silacyclopentane in the composition was 0.9% by weight.

### [Example 1-3] Synthesis of composition containing N-(1-methyl-2-methoxycarbonyl)ethyl-3-aminopropyltrimethoxysilane and 2,2-dimethoxy-1-(1-methyl-2-methoxycarbonyl)ethyl-1-aza-2-silacyclopentane

A flask equipped with a stirrer, reflux condenser, dropping funnel and thermometer was charged with 161.4 g (0.9 mol) of 3-aminopropyltrimethoxysilane and 16.1 g of methanol and heated at 60°C. Once the internal temperature became constant, 90.1 g (0.9 mol) of methyl crotonate was added dropwise over 1.5 hours and stirring was continued at the temperature for 9 hours. On distillation of the resulting reaction solution, 249.6 g of a composition containing N-(1-methyl-2-methoxycarbonyl)ethyl-3-aminopropyltrimethoxysilane and 2,2-dimethoxy-1-(1-methyl-2-methoxycarbonyl)ethyl-1-aza-2-silacyclopentane was obtained as a fraction having a boiling point of 195-199°C/7.0 kPa. The content of 2,2-dimethoxy-1-(1-methyl-2-methoxycarbonyl)ethyl-1-aza-2-silacyclopentane in the composition was 2.3% by weight.

### [Example 1-4] Synthesis of composition containing N-(ethoxycarbonyl)methyl-3-aminopropyltriethoxysilane and 2,2-diethoxy-1-(ethoxycarbonyl)methyl-1-aza-2-silacyclopentane

A flask equipped with a stirrer, reflux condenser, dropping funnel and thermometer was charged with 232.4 g (1.05 mol) of 3-aminopropyltriethoxysilane, 83.5 g (0.83 mol) of triethylamine, and 103.8 g of toluene. Then 108.6 g (0.65 mol) of ethyl bromoacetate was added dropwise over 2 hours and stirring was continued for 2 hours. The reaction solution was filtered. On distillation of the filtrate, 81.8 g of a composition containing N-(ethoxycarbonyl)methyl-3-aminopropyltriethoxysilane and 2,2-diethoxy-1-(ethoxycarbonyl)methyl-1-aza-2-silacyclopentane was obtained as a fraction having a boiling point of 194-197°C/3.0 kPa. The content of 2,2-diethoxy-1-(ethoxycarbonyl)methyl-1-aza-2-silacyclopentane in the composition was 2.4% by weight.

### [Example 2-1]

A flask equipped with a stirrer, reflux condenser, dropping funnel and thermometer was charged with 20.0 g of Composition A obtained in Example 1-1. After 0.20 g of methanol was added, the mixture was stirred at room temperature for 30 minutes, obtaining N-(2-methoxycarbonyl)ethyl-3-aminopropyltrimethoxysilane containing 0.2% by weight of 2,2-dimethoxy-1-(2-methoxycarbonyl)ethyl-1-aza-2-silacyclopentane, referred to as Composition 1.

### [Example 2-2]

A flask equipped with a stirrer, reflux condenser, dropping funnel and thermometer was charged with 20.0 g of Composition A obtained in Example 1-1. After 0.18 g of methanol was added, the mixture was stirred at room temperature for 30 minutes, obtaining N-(2-methoxycarbonyl)ethyl-3-aminopropyltrimethoxysilane containing 1.0% by weight of 2,2-dimethoxy-1-(2-methoxycarbonyl)ethyl-1-aza-2-silacyclopentane, referred to as Composition 2.

### [Example 2-3]

A flask equipped with a stirrer, reflux condenser, dropping funnel and thermometer was charged with 40.0 g of Composition A obtained in Example 1-1. After 0.14 g of methanol was added, the mixture was stirred at room temperature for 30 minutes, obtaining N-(2-methoxycarbonyl)ethyl-3-aminopropyltrimethoxysilane containing 5.0% by weight of 2,2-dimethoxy-1-(2-methoxycarbonyl)ethyl-1-aza-2-silacyclopentane, referred to as Composition 3.

### [Example 2-4]

A flask equipped with a stirrer, reflux condenser, dropping funnel and thermometer was charged with 20.0 g of Composition A obtained in Example 1-1. After 0.56 g of 2,2-dimethoxy-1-(2-methoxycarbonyl)ethyl-1-aza-2-silacyclopentane was added, the mixture was stirred at room temperature for 30 minutes, obtaining N-(2-methoxycarbonyl)ethyl-3-aminopropyltrimethoxysilane containing 10.0% by weight of 2,2-dimethoxy-1-(2-methoxycarbonyl)ethyl-1-aza-2-silacyclopentane, referred to as Composition 4.

### [2] Synthesis of resin

### [Synthesis Example 1]

Into a 500-mL separable flask equipped with an impeller, nitrogen inlet and switch cock, 19.3 g of Sannix PP-2000 (Sanyo Chemical Industries, Ltd.) and 19.3 g of Sannix GP-3000 (Sanyo Chemical Industries, Ltd.) as polyol, 50 g of calcium carbonate, and 20 g of diisononyl phthalate (FUJIFILM Wako Pure Chemical Corp.) were metered. With stirring, the mixture was heated at 80°C and under reduced pressure over 1 hour to remove the water contents in the components. After 11.6 g of diphenylmethane diisocyanate (Kanto Chemical Co., Inc.) was added, stirring was continued until diphenylmethane diisocyanate was dissolved and compatibilized. Thereafter 0.05 g of Neostann U-600 (Nitto Chemical Industry Co., Ltd.) diluted in a 20-fold with diisononyl phthalate was added. Stirring was continued for 2 hours, obtaining a urethane resin.

### [3] Preparation of resin composition

### [Examples 3-1 to 3-3 and Comparative Examples 1 and 2]

Urethane resin compositions were prepared by mixing Compositions 1 to 4 shown above, Compositions 5 and 6 shown below, the urethane resin in Synthesis Example 1, and catalyst U-810 (Nitto Chemical Industry Co., Ltd.) diluted in a 20-fold with diisononyl phthalate in the mixing ratio shown in Table 1.
- Composition 5
   N-(2-methoxycarbonyl)ethyl-3-aminopropyltrimethoxysilane • Composition 6:
   2,2-dimethoxy-1-(2-methoxycarbonyl)ethyl-1-aza-2-silacyclopentane

Using each of the urethane resin compositions, a specimen was prepared by the following procedure. It was measured for tensile shear bond strength, with the results shown in Table 1.

### [Preparation of specimen]

Two soda glass plates (25 mm by 25 mm by 3 mm thick) were immersed in 5 wt% aqueous solution of sodium hydroxide, washed with water, dried in air, and degreased with acetone. Using Teflon (registered trademark) resin blocks and masking tape, a bond space (25 mm by 10 mm by 5 mm thick) was defined. The resin composition prepared above was cast into the bond space. After the excess of the resin composition was removed, the resin composition was cured in a thermo-hygrostat tank (23°C, 50% RH) for 3 days.

### [Tensile shear bond strength test]

The specimen was subjected to the tensile test according to JIS K6850: 1999 (pulling rate 50 mm/min) at 23°C to measure the tensile shear bond strength of each resin composition.

**[Table 1]**

| | | Example 3-1 | Example 3-2 | Example 3-3 | Example 3-4 | Comparative Example 1 | Comparative Example 2 |
|---|---|---|---|---|---|---|---|
| Composition containing compounds (1) and (3) (pbw) | Composition 1 | 0.25 | - | - | - | - | - |
| | Composition 2 | - | 0.25 | - | - | - | - |
| | Composition 3 | - | - | 0.25 | - | - | - |
| | Composition 4 | - | - | - | 0.25 | - | - |
| | Composition 5 | - | - | - | - | 0.25 | - |
| | Composition 6 | - | - | - | - | - | 0.25 |
| Resin (pbw) | | 120 | 120 | 120 | 120 | 120 | 120 |
| Catalyst (pbw) | U-810 | 0.01 | 0.01 | 0.01 | 0.01 | 0.01 | 0.01 |
| Tensile shear bond strength (MPa) | | 0.88 | 1.01 | 1.08 | 0.89 | 0.85 | 0.84 |

It is demonstrated in Table 1 that the urethane resin compositions of Examples to which Compositions 1 to 4 containing compounds (1) and (3) are added show a high bond strength as compared with the urethane resin composition of Comparative Example 1 to which only compound (1) is added and the urethane resin composition of Comparative Example 2 to which only compound (3) is added.

## Claims

1. A composition comprising
a linear aminosilane compound having a carboxylic ester group, represented by the general formula (1): 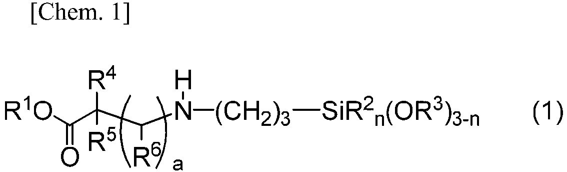 wherein R¹ is a substituted or unsubstituted, C₁-C₂₀ monovalent hydrocarbon group or a triorganosilyl group represented by the general formula (2):
-SiR⁷R⁸R⁹ (2)
wherein R⁷, R⁸, and R⁹ are each independently an unsubstituted C₁-C₂₀ monovalent hydrocarbon group, R² and R³ are each independently a substituted or unsubstituted, C₁-C₂₀ monovalent hydrocarbon group, R⁴, R⁵, and R⁶ are each independently hydrogen or a substituted or unsubstituted, C₁-C₂₀ monovalent hydrocarbon group, a is 0 or 1, and n is 0, 1 or 2, and
a cyclic silazane compound having a carboxylic ester group, represented by the general formula (3): 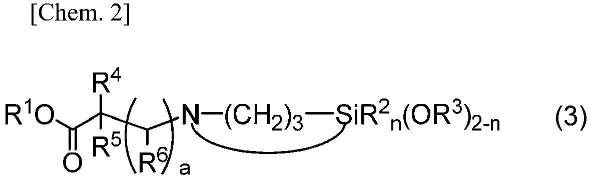 wherein R¹ to R⁶, a and n are as defined above, the content of the cyclic silazane compound being 0.2 to 10% by weight.

2. A resin composition comprising the composition of claim 1 and a resin.

3. The resin composition of claim 2 wherein the resin is at least one resin selected from the group consisting of a polyurethane resin, epoxy resin, acrylic resin, polyester, and polycarbonate.

4. The resin composition of claim 2 wherein the amount of the composition comprising the linear aminosilane compound having a carboxylic ester group and the cyclic silazane compound having a carboxylic ester group is 0.01 to 100 parts by weight per 100 parts by weight of the resin.

5. The resin composition of claim 2 which is an adhesive composition.

6. A method for preparing the composition of claim 1, comprising the steps of:
performing addition reaction of an aminosilane compound having the general formula (4):
[Chem. 3]
H₂N-(CH₂)₃-SiR²ₙ(OR³)₃₋ₙ (4)
wherein R², R³ and n are as defined above, with an unsaturated ester compound having the general formula (5): 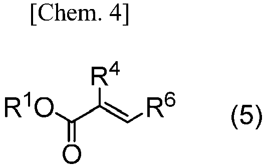 wherein R¹, R⁴ and R⁶ are as defined above, to yield a reaction solution containing the linear aminosilane compound having a carboxylic ester group, represented by formula (1), and
distilling the reaction solution to recover the linear aminosilane compound having a carboxylic ester group along with the cyclic silazane compound having a carboxylic ester group, represented by formula (3), under a pressure of 3.0 to 15.0 kPa.

7. A method for preparing the composition of claim 1, comprising the steps of:
performing substitution reaction of an aminosilane compound having the general formula (4):
[Chem. 5]
H₂N-(CH₂)₃-SiR²ₙ(OR³)₃₋ₙ (4)
wherein R², R³ and n are as defined above, with a halogenated acetic ester compound having the general formula (6): 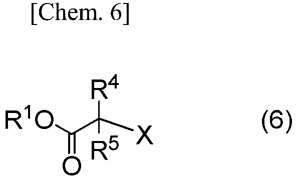 wherein R¹, R⁴ and R⁵ are as defined above and X is chlorine, bromine or iodine, to yield a reaction solution containing the linear aminosilane compound having a carboxylic ester group, represented by formula (1), and
distilling the reaction solution to recover the linear aminosilane compound having a carboxylic ester group along with the cyclic silazane compound having a carboxylic ester group, represented by formula (3), under a pressure of 3.0 to 15.0 kPa.
